# EUROPÄISCHE PATENTSCHRIFT

(11) **EP 3 917 856 B1**
(45) Veröffentlichungstag und Bekanntmachung des Hinweises auf die Patenterteilung: **03.05.2023**
(21) Anmeldenummer: 20703132.9
(22) Anmeldetag: 22.01.2020
(51) Int. Cl.: B65D 8/00, B65D 77/20

(54) **LEBENSMITTELVERPACKUNG**
FOOD PACKAGING
EMBALLAGE ALIMENTAIRE

(30) Priorität: 29.01.2019 AT 500642019
(43) Veröffentlichungstag der Anmeldung: 08.12.2021
(73) Patentinhaber: Maier, Gottfried, 4540 Bad Hall (AT)
(72) Erfinder: Maier, Gottfried, 4540 Bad Hall (AT)
(74) Vertreter: Hübscher & Partner Patentanwälte GmbH
(86) Internationale Anmeldenummer: PCT/AT2020/060019
(87) Internationale Veröffentlichungsnummer: WO 2020/154753

(56) Entgegenhaltungen:
- EP-A2- 1 905 699
- EP-B1- 1 905 699
- WO-A1-2004/033324
- WO-A2-2011/052997
- FR-A- 1 274 073
- US-A- 4 469 258

## Beschreibung

### Technisches Gebiet

Die Erfindung bezieht sich auf eine Lebensmittelverpackung mit einem Behälter aus Karton, mit einem vom Behältermantel abstehenden, umlaufenden, gesondert vom Behältermantel gefertigten Randflansch und mit einem mit dem Randflansch versiegelten Deckel aus Kunststoff.

### Stand der Technik

Zur Vermeidung eines erheblichen Kunststoffanteils bei Lebensmittelverpackungen ist es bekannt, den Behälter aus Karton zu fertigen und mit einer dünnen Kunststofffolie auszukleiden. Der Behältermantel bildet einen umlaufenden Randflansch, der mit der Kunststoffauskleidung überzogen ist, sodass ein Deckel aus Kunststoff mit dem von der Kunststoffauskleidung überzogenen Randflansch versiegelt werden kann. Nachteilig ist allerdings, dass der mit einer Kunststofffolie ausgekleidete Behälter als Sondermüll keiner unmittelbaren Wiederverwertung des Kartonanteils zugeführt werden kann. Um diesbezüglich Abhilfe zu schaffen, wurde bereits vorgeschlagen (EP 2 965 997 A1), die Auskleidungsfolie mit einer über den Randflansch vorstehenden Lasche zu versehen, mit deren Hilfe die Kunststoffauskleidung vom Kartonbehälter abgezogen werden kann.

Bei einer anderen bekannten Lebensmittelverpackung (WO 2013/002639 A1) wird die Kunststoffauskleidung des Kartonbehälters mit einem auf den Randflansch des Behältermantels aufkaschierten Ring verbunden, der vom Randflansch mithilfe einer vorstehenden Randlasche abziehbar ist, sodass zum Lösen der Kunststoffauskleidung vom Kartonbehälter der Ring mit der Kunststofffolie der Auskleidung vom Kartonbehälter abgezogen werden kann.

Unabhängig davon, ob die Kunststoffauskleidung mithilfe eines Befestigungsringes oder ohne einen solchen Ring vom Kartonbehälter gelöst wird, ist es notwendig, die Kunststofffolie der Auskleidung in einem gesonderten Handhabungsschritt vom Kartonbehälter zu lösen, was häufig dazu führt, dass diese Trennung nicht vorgenommen wird und der mit einer Kunststofffolie ausgekleidete Kartonbehälter im Sondermüll landet.

Schließlich ist es bekannt (WO 2004/033324 A1), an wannenförmige bzw. schachtelförmige Kartonbehälter für Lebensmittelverpackungen einen Randflansch aus Kunststoff anzuspritzen, um durch den angespritzten Randflansch einerseits gute Anschlussverhältnisse für einen dichten Deckelabschluss zu schaffen und anderseits eine Versteifung des Kartonbehälters zu erreichen. Da beim Öffnen des Deckels, und zwar unabhängig davon, ob der Deckel als Klappdeckel, als Schnappverschlussdeckel oder als Abziehfolie ausgebildet ist, der Deckel vom angespritzten Randflansch gelöst wird, verbleibt der angespritzte Randflansch am Kartonbehälter, der somit wiederum als Sondermüll zu behandeln ist.

### Darstellung der Erfindung

Der Erfindung liegt somit die Aufgabe zugrunde, eine Lebensmittelverpackung aus Karton und Kunststoff so auszugestalten, dass eine zwangsweise Trennung des Kunststoffanteils vom Kartonanteil möglich wird.

Ausgehend von einer Lebensmittelverpackung der eingangs geschilderten Art löst die Erfindung die gestellte Aufgabe dadurch, dass die Haftung zwischen dem Randflansch und dem Behältermantel kleiner als die durch die Versiegelung bedingte Haftung zwischen dem Randflansch und dem Deckel ist.

Durch die Maßnahme, den Randflansch des Behältermantels gesondert herzustellen und mit dem Behältermantel lösbar zu verbinden, und zwar unter der Maßgabe, dass die Haftung zwischen dem Randflansch und dem Behältermantel geringer als die Haftung zwischen dem Randflansch und dem mit dem Randflansch versiegelten Deckel ausfällt, wird in einfacher Weise sichergestellt, dass mit dem Öffnen der Lebensmittelverpackung durch ein Abziehen des Deckels der Randflansch ebenfalls vom Behältermantel gelöst wird, sodass mit dem Öffnen der Lebensmittelverpackung die Trennung des Kunststoffanteils vom Kartonanteil zwangsläufig erfolgt. Es ist lediglich dafür zu sorgen, dass der Kartonbehälter die erforderliche Dichtheit gegenüber dem Verpackungsinhalt aufweist, was durch eine die Wiederverwertbarkeit des Kartonanteils nicht beeinträchtigende Imprägnierung oder Beschichtung gemäß dem Stand der Technik erreicht werden kann.

Besonders vorteilhafte Herstellungsbedingungen ergeben sich, wenn der Randflansch aus Kunststoff an den oberen Rand des Behältermantels angespritzt wird, weil in diesem Fall ein gesonderter Fügeschritt zum Verbinden des Randflansches mit dem Behältermantel entfällt. Es ist aber auch durchaus möglich, den Randflansch zunächst für sich zu fertigen und anschließend mit dem Behältermantel zu verbinden. Zu diesem Zweck kann der aus Kunststoff gefertigte Randflansch einen gegen den Behältermantel vorstehenden Anschlusssteg mit einer Aufnahmenut für den oberen Rand des Behältermantels aufweisen, sodass der obere Rand des Behältermantels in der Aufnahmenut mittels eines entsprechenden Klebers dicht, aber lösbar festgehalten wird.

Durch das Vorsehen eines vom Behältermantel gesonderten Randflansches wird auch der Einsatz eines Randflansches aus Karton möglich, wenn zwischen Randflansch und Behältermantel eine kleinere Haftung als die durch die Versiegelung bedingte Haftung zwischen Randflansch und Kunststoffdeckel sichergestellt wird. Es muss allerdings für eine beidseitige Beschichtung oder Imprägnierung des Randflansches gesorgt werden, um eine dichte Lebensmittelverpackung zu erhalten. Mit einem Randflansch aus Karton ergeben sich einfache Konstruktionsbedingungen, wenn der Randflansch aus einem tiefgezogenen Rahmen aus Karton gefertigt ist und der gegen den Behältermantel vorstehende Kragen des tiefgezogenen Rahmens mit dem Behältermantel verbunden ist.

### Kurze Beschreibung der Erfindung

In der Zeichnung ist der Erfindungsgegenstand beispielsweise dargestellt. Es zeigen
- Fig. 1: einen Zuschnitt aus Karton für einen Behälter einer erfindungsgemäßen Lebensmittelverpackung,
- Fig. 2: eine erfindungsgemäße Lebensmittelverpackung mithilfe eines aus einem Zuschnitt gemäß Fig. 1 aufgerichteten Behälters aus Karton ausschnittweise in einem Schnitt nach der Linie II-II der Fig. 1 in einem größeren Maßstab und
- Fig. 3: eine der Fig. 2 entsprechende Darstellung einer Ausführungsvariante einer erfindungsgemäßen Lebensmittelverpackung.

### Wege zur Ausführung der Erfindung

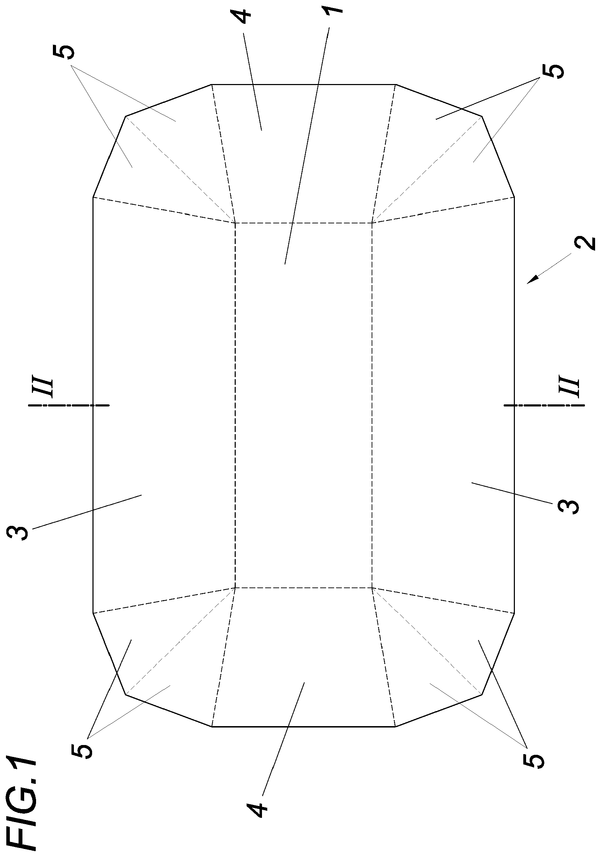

Gemäß dem in Fig. 1 dargestellten Zuschnitt aus Karton weist der zu errichtende Behälter einen Boden 1 und einen an den Boden 1 angesetzten Behältermantel 2 aus zwei Längswänden 3 und zwei Stirnwänden 4 auf. In den Eckbereichen sind zwischen den Längs- und Stirnwänden 3, 4 Falteinschläge 5 vorgesehen, die beim Aufrichten des Kartonbehälters aneinander zu liegen kommen und jeweils gegen die zugehörige Stirnwand 4 gefaltet werden. Der aus dem Zuschnitt aufgerichtete Behälter besitzt einen durchgehenden Behältermantel ohne Randflansch. Um allenfalls eine für das Verpackungsgut erforderliche Dichtheit zu gewährleisten, kann der Karton in an sich bekannter Weise entsprechend imprägniert oder mit einer Beschichtung versehen werden, ohne die Wiederverwertbarkeit des Kartonanteils zu gefährden und den Kartonanteil als Sondermüll behandeln zu müssen.

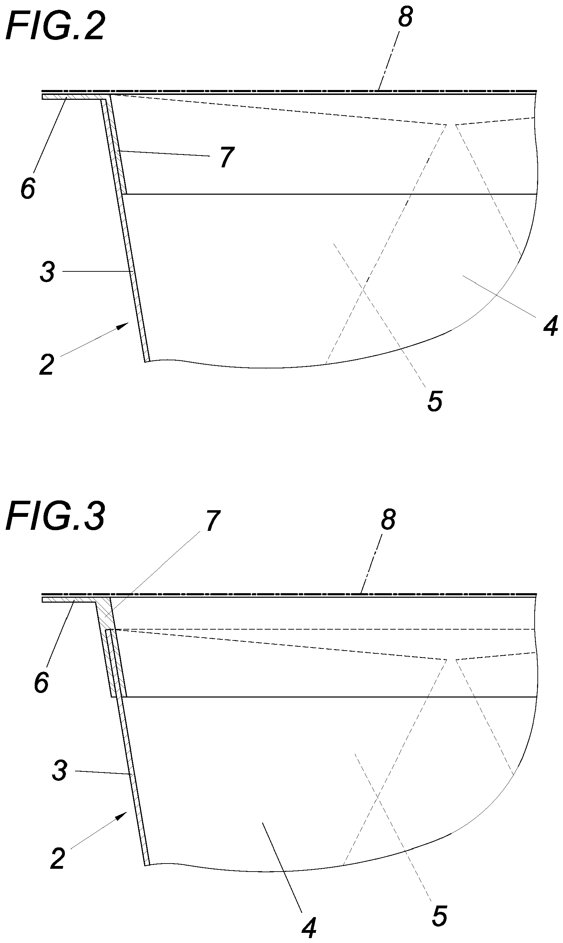

Zur Ausbildung eines Randflansches 6 wird dieser gemäß der Fig. 2 aus Kunststoff an den freien Rand des Behältermantels 2 des aus dem Zuschnitt aufgerichteten Behälters angespritzt, und zwar mittels eines Anschlussstegs 7. Nach dem Füllen des Behälters wird ein Deckel 8 in Form einer Kunststofffolie mit dem Randflansch 6 aus Kunststoff versiegelt. Diese Versiegelung findet unter der Bedingung statt, dass die Haftung zwischen der Kunststofffolie des Deckels 8 und dem Randflansch 6 größer als die Haftung zwischen dem Randflansch 6 und dem Behältermantel 2 ist, sodass sich beim Öffnen der Lebensmittelverpackung durch ein Abziehen des Deckels 8 der Anschlusssteg 7 vom Behältermantel 2 löst und der Deckel 8 zusammen mit dem Randflansch 6 vom Kartonbehälter abgezogen wird, was zugleich eine Trennung der Karton- und Kunststoffanteile der Lebensmittelverpackung bedeutet.

Aus der Darstellung der Fig. 2 wird offensichtlich, dass der Randflansch auch aus einem tiefgezogenen Rahmen aus Karton gefertigt werden kann, wenn die Haftbedingungen zwischen Behältermantel 2 und Anschlusssteg 7 einerseits und zwischen Randflansch 6 und Deckel 8 anderseits entsprechend gewählt werden, weil auch in diesem Fall der Randflansch 6 beim Abziehen des Deckels 8 vom Behälter gelöst wird.

Die Ausführungsform nach der Fig. 3 unterscheidet sich von der nach Fig. 2 lediglich dadurch, dass der Randflansch 6 nicht an den oberen Rand des Behältermantels 2 angespritzt, sondern gesondert vom Kartonzuschnitt für sich aus Kunststoff hergestellt wird, um erst nachträglich mit dem aus dem Zuschnitt aufgerichteten Behälter verbunden zu werden. Um eine vorteilhafte, dichte Verbindung zwischen dem Randflansch 6 und dem Behältermantel 2 zu erreichen, kann der Anschlusssteg 7 des Randflansches 6 mit einer Aufnahmenut 9 ausgebildet werden, in die der obere Rand des Behältermantels 2 eingreift und verklebt wird, wobei wiederum die Bedingung eingehalten werden muss, dass die Haftung zwischen dem Randsteg 6 und dem Behältermantel 2 geringer ausfallen muss als die Haftung zwischen dem Randflansch 6 und dem Deckel 8.

## Patentansprüche

1. Lebensmittelverpackung mit einem Behälter aus Karton, mit einem vom Behältermantel (2) abstehenden, umlaufenden, gesondert vom Behältermantel (2) gefertigten Randflansch (6) und mit einem mit dem Randflansch (6) versiegelten Deckel (8) aus Kunststoff, **dadurch gekennzeichnet, dass** die Haftung zwischen dem Randflansch (6) und dem Behältermantel (2) kleiner als die durch die Versiegelung bedingte Haftung zwischen dem Randflansch (6) und dem Deckel (8) ist.

2. Lebensmittelverpackung nach Anspruch 1, **dadurch gekennzeichnet, dass** der Randflansch (6) aus Kunststoff an den oberen Rand des Behältermantels (2) angespritzt ist.

3. Lebensmittelverpackung nach Anspruch 1, **dadurch gekennzeichnet, dass** der Randflansch (6) aus Kunststoff einen gegen den Behältermantel (2) vorstehenden Anschlusssteg (7) mit einer Aufnahmenut (9) für den oberen Rand des Behältermantels (6) aufweist.

4. Lebensmittelverpackung nach Anspruch 1, **dadurch gekennzeichnet, dass** der Randflansch (6) aus einem tiefgezogenen Rahmen aus Karton gefertigt ist und dass der gegen den Behältermantel (2) vorstehende, einen Anschlusssteg (7) bildende Kragen des tiefgezogenen Rahmens mit dem Behältermantel (6) verbunden ist.

## Claims

1. Food package comprising a container consisting of cardboard, comprising a circumferential edge flange (6) which protrudes from the container casing (2) and is produced separately from the container casing (2), and comprising a cover (8) which consists of synthetic material and is sealed to the edge flange (6), **characterised in that** the adhesion between the edge flange (6) and the container casing (2) is weaker than the adhesion, determined by the sealing process, between the edge flange (6) and the cover (8).

2. Food package as claimed in claim 1, **characterised in that** the edge flange (6) consisting of synthetic material is injected onto the upper edge of the container casing (2).

3. Food package as claimed in claim 1, **characterised in that** the edge flange (6) consisting of synthetic material has a connecting web (7) which protrudes towards the container casing (2) and has a receiving groove (9) for the upper edge of the container casing (6).

4. Food package as claimed in claim 1, **characterised in that** the edge flange (6) is produced from a deep-drawn frame consisting of cardboard and **in that** the collar of the deep-drawn frame which protrudes towards the container casing (2) and forms a connecting web (7) is connected to the container casing (6).

## Revendications

1. Emballage alimentaire comprenant un récipient en carton, une bride de bordure périphérique (6) qui fait saillie à partir de l'enveloppe de récipient (2) et qui est fabriquée séparément de l'enveloppe de récipient (2), et un couvercle en matière plastique (8) qui est scellé à la bride de bordure (6), **caractérisé en ce que** l'adhérence entre la bride de bordure (6) et l'enveloppe de récipient (2) est inférieure à l'adhérence entre la bride de bordure (6) et le couvercle (8) en raison du scellement.

2. Emballage alimentaire selon la revendication 1, **caractérisé en ce que** la bride de bordure en matière plastique (6) est moulée par injection sur le bord supérieur de l'enveloppe de récipient (2).

3. Emballage alimentaire selon la revendication 1, **caractérisé en ce que** la bride de bordure en matière plastique (6) comporte une nervure de raccordement (7) qui fait saillie contre l'enveloppe de récipient (2) et qui présente une rainure de réception (9) destinée à recevoir le bord supérieur de l'enveloppe de récipient (2).

4. Emballage alimentaire selon la revendication 1, **caractérisé en ce que** la bride de bordure (6) est fabriquée à partir d'un cadre en carton embouti, et **en ce que** la collerette du cadre embouti, qui fait saillie contre l'enveloppe de récipient (2) et qui forme une nervure de raccordement (7), est reliée à l'enveloppe de récipient (2).
